# EUROPÄISCHE PATENTANMELDUNG

(11) **EP 4 667 092 A1**
(43) Veröffentlichungstag der Anmeldung: **24.12.2025**
(21) Anmeldenummer: 25177211.7
(22) Anmeldetag: 19.05.2025
(51) Int. Cl.: B01F 23/60, B01F 31/60, B01F 35/222

(54) **VORRICHTUNG ZUR VERMISCHUNG UND/ODER KONDITIONIERUNG PULVERFÖRMIGER MATERIALIEN UND VERFAHREN ZUM BETREIBEN DERSELBEN**

(30) Priorität: 17.06.2024 DE 102024116987
(71) Anmelder: Rösler Holding GmbH, 96231 Bad Staffelstein (DE)
(72) Erfinder: BECK, Moritz, 96231 Bad Staffelstein (DE); MÜLLER, Florian, 96106 Ebern (DE); BRAUNROTH, Domenik, 96450 Coburg (DE)
(74) Vertreter: Manitz Finsterwald Patent- und Rechtsanwaltspartnerschaft mbB

(57) **Zusammenfassung**

Eine Vorrichtung (1) zur Vermischung und/oder Konditionierung pulverförmiger Materialien durch fluidfreie Fluidisierung umfasst einen beweglich gelagerten Behälter (10), der eine erste Bearbeitungskammer (20) zur Aufnahme pulverförmigen Materials definiert; einen Schwingungserzeuger (16), durch den im Betrieb ein in der Bearbeitungskammer befindliches pulverförmiges Material mit einer Schwingung, insbesondere einer sinusförmigen Schwingung, beaufschlagt werden kann; und eine Steuereinheit (18), die den Schwingungserzeuger ansteuert.

## Beschreibung

Die Erfindung betrifft eine Vorrichtung zur Vermischung und/oder Konditionierung pulverförmiger Materialien und ein Verfahren zum Betreiben derselben.

In einigen technischen Anwendungen werden besonders hohe Anforderungen an die Homogenität von Pulvern und insbesondere von Mischungen gestellt, die aus mindestens zwei Pulverkomponenten bestehen. Beispiele hierfür sind Anwendungen für Sinterwerkstoffe, Mischaufgaben in der pharmazeutischen oder chemischen Industrie oder die Bereitstellung konditionierter Pulver als Einsatzstoffe in der additiven Fertigung (z.B. Kunststoff-SLS-Verfahren).

Mischungen aus zwei oder mehreren pulverförmigen Komponenten werden üblicherweise in mechanischen Mischern (ausgerüstet mit Rührwerken, Schnecken, rotierenden Paddeln, statischen Mischorganen, Doppelkonusmischern etc.) oder mittels Fluidisierung in einem Fließbett (Wirbelbett, Wirbelschicht) hergestellt. Bei der Fluidisierung werden pulverförmige Materialien in einem Fluidströmungsfeld suspendiert, um sie effektiv zu mischen. Dabei wird ein Fluid, typischerweise Luft oder ein anderes Gas, von unten nach oben durch das pulverförmige Material geleitet, wodurch die Partikel oberhalb des sogenannten Lockerungspunkts mobilisiert werden und sich so leicht und auch partikelschonend vermischen können. Dieses Verfahren wird in industriellen Anwendungen, wie z.B. in der Lebensmittel-, Pharma- und Chemieindustrie eingesetzt, um homogene Mischungen herzustellen.

Beide Vorgehensweisen sind jedoch mit Nachteilen verbunden.

Mechanische Mischer benötigen zum Teil lange Mischzeiten, bis homogene Mischungen hergestellt sind. Gerade bei pulverförmigen Stoffen können lange Mischzeiten zu einer Überbeanspruchung der Pulverpartikel führen und deren Größenverteilung und Struktur nachteilig verändern.

Ein großer Nachteil bei der Fluidisierung durch Gas (z.B. Luft) besteht darin, dass das gesamte Gas, das zur Fluidisierung des Pulvers in die Schüttung eingeleitet wird, diese auch wieder verlassen muss. Dabei werden abhängig von der Gasgeschwindigkeit Partikel verschiedener Größe mit ausgetragen, die dann außerhalb der Schüttung über Abscheideeinheiten (z.B. Filter, Zyklone) wieder abgeschieden werden müssen. Gegebenenfalls sind weitergehende Maßnahmen in der Abgasreinigung zur Einhaltung umwelttechnischer Vorschriften (z.B. Staubeintrag über die Abluft), zur Arbeitssicherheit (z.B. Explosionsschutz) oder zum Gesundheitsschutz (z.B. Staubbelastung der Atemluft) erforderlich. Das ausgetragene Pulver ist für den Prozess verloren, sofern es nicht wieder zurückgeführt und dann seinerseits wieder eingemischt wird. Dies bedeutet jedoch einen nicht unerheblichen, zusätzlichen apparativen Aufwand. Durch die Abscheidung in Filtern oder Zyklonen werden die Pulverpartikel zudem mechanisch beansprucht und können dabei in Größenverteilung und Struktur verändert werden.

In technischen Anwendungen üblicherweise nicht zur Vermischung eingesetzt werden Verfahren, in denen Feststoff-Schüttungen ohne Fluiddurchströmung fluidisiert werden. Derartige fluidfreie Fluidisierungen ohne zugeführte äußere Fluidströmung (im Folgenden "fluidfreie Fluidisierung") basieren z.B. auf dem Anlegen von Vibrationen an die Partikelschüttung. Durch die richtige Wahl von Frequenz und Amplitude werden die Pulverpartikel in Bewegung gesetzt, können in Schwebe gehalten werden und zeigen in diesem Zustand ein ähnliches Verhalten wie ein konventionelles Fließbett mit von außen zugeführter Gasströmung.

Zur Vermischung von Pulvern, z.B. von Kunststoff-, Kunststoff-Metall-Hybrid- oder (Leicht-)Metall-Pulvern mit einer mittleren Korngröße von weniger als 200 µm, wird eine Vorrichtung benötigt, mit der eine effektive Homogenisierung der Pulvermischung gelingt, ohne dabei das Pulver im Mischprozess oder in vor- oder nachgelagerten Prozessen stark mechanisch zu beanspruchen und damit in seinen Eigenschaften für die weitere Verwendung nachteilig zu verändern. Weiterhin soll der mechanische Aufbau und das eingesetzte Mischprinzip so ausgeführt sein, dass auf aufwändige aktive Verfahren zur Abreinigung austretender Fluide (Gase), etwa zur Einhaltung von Richtlinien und Anforderungen aus Umweltschutz, Arbeitssicherheit und Gesundheitsschutz, verzichtet werden kann.

Die Lösung dieser Aufgabe erfolgt durch eine Vorrichtung mit den Merkmalen des Anspruchs 1.

Die Vorrichtung umfasst mindestens einen beweglich gelagerten Behälter, der eine erste Bearbeitungskammer zur Aufnahme pulverförmigen Materials definiert. Weiterhin umfasst die Vorrichtung einen Schwingungserzeuger, auch Vibrationserzeuger oder Oszillator genannt, durch den im Betrieb ein in der Bearbeitungskammer befindliches pulverförmiges Material mit einer Schwingung beaufschlagt werden kann, sowie eine Steuereinheit, die den Schwingungserzeuger ansteuert.

Die Bearbeitungskammer kann als eine Mischkammer fungieren, in der mindestens zwei verschiedene pulverförmige Materialien vorgelegt werden, um sie miteinander zu vermischen. Die Bearbeitungskammer kann alternativ oder zusätzlich auch eingesetzt werden, um ein Pulver oder eine Pulvermischung bezüglich bestimmter physikalischer Eigenschaften zu konditionieren. Das kann dann erforderlich sein, wenn sich bei einem Pulver oder einer Pulvermischung, z.B. durch lange Liegezeiten oder Transport, für die weiteren Verarbeitungsschritte wichtige physikalische Eigenschaften wie die Homogenität der Partikelgrößenverteilung, die Fließfähigkeit oder die Feuchte des Pulvers verändert haben.

Der Aufbau der Vorrichtung ermöglicht es, dass die Fluidisierung des Pulverbetts alleine durch die Beaufschlagung des Pulvers mit der von dem Schwingungserzeuger erzeugten Schwingung erfolgen kann, ohne das herkömmliche Einleiten von Fluiden. Somit ermöglicht die Vorrichtung eine Fluidisierung ohne Austrag von Partikeln oder Gasen.

Vor allem bei mechanisch empfindlichen Pulvern bietet die Vorrichtung zudem auch den Vorteil, dass durch die Fluidisierung mittels Schwingung eine gute Durchmischung auf schnellere und zugleich schonendere Art erreicht wird, als dies beim Einsatz mechanischer Mischeinrichtungen möglich wäre.

Vorteilhafte Ausführungsformen der Erfindung sind in der nachfolgenden Beschreibung, der Zeichnung sowie den Unteransprüchen beschrieben.

Die Schwingung ist insbesondere eine sinusförmige oder sinusähnliche Schwingung. Eine derartige Schwingung eignet sich besonders gut dazu, die Pulver so zu fluidisieren, dass sich eine Wirbelschicht oder eine pulsierende Wirbelschicht ausbildet.

Es hat sich als besonders wirksam erwiesen, wenn die Schwingung eine überwiegende vertikale Komponente aufweist, insbesondere im Wesentlichen vertikal erfolgt. Dadurch werden die Partikel in der Pulverschüttung entgegen der Schwerkraft nach oben beschleunigt. Bei einer geeigneten Kombination von Frequenz und Amplitude wird dadurch in der Vorrichtung kein Gas zugeführt, jedoch Gas (z.B. Luft) aus der Umgebung in die Schüttung eingesaugt. Dieses Gas lagert sich um die Partikel, unterstützt damit deren schonende Mobilisierung und lagert sich auch zu kleinen oder größeren Gasblasen oder auch flächenförmigen Gasfronten zusammen, die dann ausgehend vom Boden der Bearbeitungskammer oder optional vorhandenen Einbauten oder aus der Pulverschüttung als größere Gasvolumina in der Schüttung aufsteigen. Auf diese Weise entsteht in der Vorrichtung eine Fluidisierung, deren Eigenschaften bezüglich der Durchmischung der Pulverkomponenten ähnlich sind wie in pulsierenden Wirbelschichten oder siedenden Flüssigkeiten. Allerdings ist in der Vorrichtung keine äußere Fluidströmung erforderlich, die dann das Pulverbett auch wieder verlassen müsste und beim Verlassen gegebenenfalls Pulverpartikel mitrisse, die dann aufwendig wieder abgeschieden werden müssten.

Die Vorrichtung kann daher so aufgebaut sein, dass sie keine Mittel zur Durchströmung des Pulvers mit einem Gas oder einem sonstigen Fluid umfasst bzw. aufweist.

Die Schwingung ist nicht auf eine Schwingung beschränkt, die im Wesentlichen vertikal, also in Schwerkraftrichtung senkrecht zu einer Horizontalen, erfolgt, obwohl eine derart ausgebildete Vorrichtung eine vorteilhafte Ausführungsform der vorliegenden Erfindung darstellt. Die Schwingung kann zum Beispiel lediglich eine vertikale Komponente aufweisen, also in einer Richtung geneigt zur Horizontalebene erfolgen.

Der Behälter kann daher insbesondere vertikal beweglich gelagert sein.

In der Bearbeitungskammer können ein Einbau oder mehrere Einbauten vorgesehen sein. Beispiele für geeignete Einbauten sind Paddel, Siebböden oder Bleche. Das Vorhandensein solcher Einbauten kann die Fluidisierung und die Durchmischung und/oder die Konditionierung unterstützen. Anders als bei einem mechanischen Mischer können diese Einbauten jedoch insbesondere während der Fluidisierung feststehend, also nicht beweglich relativ zu Wandungen oder Boden der Bearbeitungskammer, angebracht sein.

Die Einbauten können insbesondere jedoch lösbar oder so ausgebildet sein, dass sie sich aus der Bearbeitungskammer entnehmen, beispielsweise nach oben herausheben lassen, wobei die Entnahme während oder nach Abschluss des Misch- oder Konditionierungsprozesses erfolgen kann. Vorteilhafterweise sind die entnehmbaren Einbauten so ausgebildet, dass sie den Durchtritt von Partikeln unterhalb einer vorgegebenen Partikelgröße erlauben, beispielsweise als Siebboden oder Lochblech. Zum Beispiel kann das Pulver bei einer Ausführung der Einbauten als Siebboden durch die Löcher abfließen und verbleibt in der Bearbeitungskammer, während die größeren Agglomerate, Stücke oder Bauteile auf dem Siebboden verbleiben und mit diesem nach oben herausgehoben werden können. Somit können entnehmbare Einbauten auch nachgelagerte Prozessschritte wie das Entfernen von Agglomeraten und Stücken oder das Entnehmen von Bauteilen aus pulverbettbasierten Verfahren zur additiven Fertigung unterstützen.

Bei dem Schwingungserzeuger kann es sich beispielsweise um einen Vibrationsmotor, Magnetvibrator, Kolbenvibrator, Kugelvibrator, Rollenvibrator, Turbinenvibrator oder Körperschallerzeuger handeln. Es können in der Vorrichtung auch mehrere Schwingungserzeuger vorgesehen sein.

Die Vorrichtung kann eine Kopplung zwischen dem Behälter und dem Schwingungserzeuger umfassen, die so ausgebildet ist, dass im Betrieb die Schwingung über einen Boden und/oder eine Wandung des Behälters auf ein in der ersten Bearbeitungskammer befindliches pulverförmiges Material übertragen wird. Hierfür ist beispielsweise eine mechanische Kopplung geeignet. Der Schwingungserzeuger kann zum Beispiel unterhalb oder seitlich des Behälters angeordnet sein. Der Behälter kann zum Beispiel auf einer Grundplatte angebracht sein, die durch einen unter der Grundplatte angeordneten Schwingungserzeuger zu Schwingungen angeregt wird.

Die erste Bearbeitungskammer kann einen Einbau oder mehrere Einbauten enthalten, der/die so ausgebildet ist/sind, dass im Betrieb die Schwingung über den Einbau oder die mehreren Einbauten auf ein in der ersten Bearbeitungskammer befindliches pulverförmiges Material übertragen wird. Die Schwingungsanregung des pulverförmigen Materials in der Bearbeitungskammer erfolgt dabei also über schwingungsangeregte Einbauten wie Paddel, Siebböden oder Bleche.

In diesem Fall ist es möglich, dass die erste Bearbeitungskammer ohne eigene Schwingungsanregung des Bodens und der Wandung ausgeführt ist, so dass die Schwingung nur über die Einbauten in der Bearbeitungskammer übertragen wird.

Es ist jedoch auch möglich, die beiden oben genannten Möglichkeiten zu kombinieren, d.h. im Betrieb die Schwingung sowohl über einen Boden und/oder eine Wandung des Behälters als auch über in der ersten Bearbeitungskammer vorgesehene Einbauten auf ein in der ersten Bearbeitungskammer befindliches pulverförmiges Material zu übertragen.

Die Vorrichtung kann mindestens eine Vorhalteeinheit, insbesondere mindestens zwei Vorhalteeinheiten, zur Aufnahme zu vermischender und/oder zu konditionierender pulverförmiger Materialien umfassen. Die Vorhalteeinheiten dienen als Vorratsgefäße zum Vorhalten pulverförmiger Materialien, die der ersten Bearbeitungskammer zugeführt und dort einer Fluidisierung unterzogen werden sollen. Wenn die Vorrichtung genutzt wird, um zwei oder mehr pulverförmige Materialien zu vermischen, kann es vorteilhaft sein, für jedes zuzuführende pulverförmige Material eine eigene Vorhalteeinheit vorzusehen. Das heißt, die Vorrichtung kann zwei oder mehr erste Vorhalteeinheiten umfassen.

Die Vorrichtung kann mindestens eine erste Fördereinheit, insbesondere mindestens zwei erste Fördereinheiten, zur Zuführung pulverförmiger Materialien in die Bearbeitungskammer umfassen.

Alternativ oder zusätzlich kann die Vorrichtung eine zweite Fördereinheit zur Abführung pulverförmiger Materialien aus der Bearbeitungskammer umfassen.

Die Fördereinrichtungen können sowohl passiver Art, also beispielsweise als Rohrleitungen oder Schläuche ausgebildet, oder aktiver Art, also beispielsweise als Schneckenförderer oder Vibrationsrinnen ausgebildet sein. Das zu fördernde Pulver kann durch Einwirkung der Schwerkraft befördert, aber auch durch Unterdruck, d.h. mittels einer Pumpe, in die Vorrichtung gesaugt werden, beispielsweise durch einen Schlauch und/oder eine Sauglanze.

Eine erste Fördereinheit kann zum Beispiel eine ggf. vorhandene Vorhalteeinheit, die als Vorratsbehälter für ein zu vermischendes und/oder zu konditionierendes pulverförmiges Material dient, mit der ersten Bearbeitungskammer verbinden. Wenn die Vorrichtung genutzt wird, um zwei oder mehr pulverförmige Materialien zu vermischen, kann es vorteilhaft sein, für jedes zuzuführende pulverförmige Material eine eigene erste Fördereinrichtung vorzusehen. Das heißt, die Vorrichtung kann zwei oder mehr erste Fördereinheiten umfassen.

Eine zweite Fördereinheit kann zum Beispiel die erste Bearbeitungskammer mit einem Behälter verbinden, der nach erfolgter Fluidisierung vermischte und/oder konditionierte pulverförmige Materialien aufnimmt.

Vorhalteeinheiten, erste Fördereinrichtungen und zweite Fördereinrichtungen tragen zur Verbesserung der Prozessstabilität und zur Reduzierung der Staubbelastung in der Umgebung der Anlage bei, insbesondere durch Reduzierung des Handlings der einzelnen pulverförmigen Materialien.

Die Vorrichtung kann ein Sieb enthalten, das Agglomerate und/oder Fremdkörper zurückhält und verhindert, dass diese in die Bearbeitungskammer gelangen.

Zudem kann die Vorrichtung Hilfsmittel umfassen, die am Sieb angeordnet sind und den Siebvorgang unterstützen, indem sie das Sieb zu Schwingungen anregen, zum Beispiel Vibrationsmotoren und/oder Ultraschallerzeuger. Dadurch kann der Siebvorgang erleichtert und beschleunigt werden. Zudem lassen sich auf diese Weise ggf. im zugeführten Pulver vorhandene Agglomerate aufbrechen und zerkleinern. Diese Hilfsmittel dienen jedoch nicht der Fluidisierung, sondern wirken nur auf das Sieb.

Die Vorrichtung kann eine Speicherkammer zur Aufnahme pulverförmiger Materialien aus der ersten Bearbeitungskammer umfassen. Es können auch mehrere Speicherkammern vorgesehen sein. Die Speicherkammern dienen dazu, nach erfolgter Fluidisierung die vermischten und/oder konditionierten pulverförmigen Materialien zu sammeln. Die Staubbelastung der Umgebung und der manuelle Aufwand für Entnahme, Lagerung und Transport des fertigen Pulvers aus der Vorrichtung wird dadurch verringert.

Die Vorrichtung kann eine Entleerungseinheit zur Entleerung der ersten Bearbeitungskammer umfassen, wobei die Entleerungseinheit dazu ausgebildet ist, pulverförmige Materialien aus der ersten Bearbeitungskammer in eine Speicherkammer oder aus der Vorrichtung heraus zu transportieren, insbesondere durch Schwerkraft oder durch eine angetriebene Förderung. Dies erleichtert die Handhabung des fertigen Pulvers und reduziert die Staubbelastung.

Die Entleerung der Bearbeitungskammer kann insbesondere durch Schwerkraft oder durch eine angetriebene Förderung bewirkt werden. Insbesondere kann die Entleerung der Bearbeitungskammer derart erfolgen, dass das pulverförmige Material dabei in einer Speicherkammer aufgenommen wird.

Beispielsweise kann eine einfache Entleerungseinheit eine in der Wandung oder am Boden der Bearbeitungskammer vorgesehene Öffnung und eine Klappe umfassen, wobei die Öffnung im Betrieb (während der Fluidisierung) durch die Klappe verschließbar ist und nach erfolgter Fluidisierung die Klappe geöffnet werden kann, so dass die vermischten und/oder konditionierten pulverförmigen Materialien aus der Bearbeitungskammer unter Einwirkung der Schwerkraft herausfallen und, z.B. in einem geeigneten Gefäß außerhalb der Vorrichtung oder einer Speicherkammer innerhalb der Vorrichtung, aufgefangen werden können. Die Klappe kann beispielsweise als Schwenkklappe oder als Schiebeklappe ausgeführt sein.

Alternativ kann am Boden des Behälters bzw. der Bearbeitungskammer ein Anschluss für einen Schlauch vorgesehen sein. Über einen angeschlossenen Schlauch kann, beispielsweise durch Ansaugen des Pulvers mittels Unterdrucks oder aufgrund der Schwerkraftwirkung, die Bearbeitungskammer entleert werden.

Die Vorrichtung kann eine Gasüberwachungseinheit umfassen, die dazu ausgebildet ist, die Zusammensetzung, insbesondere die Gasfeuchte, eines Gases, das mit zu vermischendem und/oder zu konditionierendem pulverförmigem Material in Kontakt steht oder gebracht werden soll, zu erfassen, einzustellen und/oder zu regeln.

Somit kann das pulverförmige Material in der Vorrichtung beispielsweise mit einer Gasatmosphäre eingestellter und konstanter Feuchte in Kontakt gebracht werden, was die Einstellung der Feuchte, insbesondere Oberflächenfeuchte eines pulverförmigen Materials erlaubt. Dies ist vorteilhaft, weil die Prozessstabilität nachgelagerter Verwendungsschritte für die in der Vorrichtung vermischten und/oder konditionierten pulverförmigen Materialien zum Beispiel bei Kunststoffpulvern für die additive Fertigung (etwa für Polyamid in Kunststoff-SLS-Anwendungen) stark von der Feuchtigkeit, insbesondere der Oberflächenfeuchtigkeit der Pulver abhängt.

Alternativ oder zusätzlich können auch andere Parameter, etwa der Sauerstoffgehalt des Gases, erfasst, eingestellt oder geregelt werden. Dies kann beispielsweise von Vorteil sein, wenn durch Luftsauerstoff oxidierbare Metallpulver unter einer Inertgasatmosphäre (Stickstoff, Argon) mit möglichst geringem Sauerstoffgehalt vermischt oder konditioniert werden sollen.

Mit dem Gas, dessen Zusammensetzung, insbesondere Feuchte, wie oben erläutert eingestellt bzw. geregelt wird, kann das Pulver in der ersten Bearbeitungskammer oder in einem anderen Teil der Vorrichtung in Kontakt gebracht werden. Das Gas dient jedoch nicht der Fluidisierung, sondern bildet lediglich die Atmosphäre innerhalb der Vorrichtung oder innerhalb eines Teils der Vorrichtung.

Das pulverförmige Material kann innerhalb der ersten Bearbeitungskammer mit dem Gas in Kontakt gebracht werden, insbesondere während der Fluidisierung.

In der Vorrichtung kann zusätzlich auch eine zweite Bearbeitungskammer vorgesehen sein, zum Beispiel zum in Kontakt Bringen des Gases mit dem pulverförmigen Material. Die zweite Kammer kann so ausgebildet sein, dass durch den Schwingungserzeuger im Betrieb auch ein in der zweiten Bearbeitungskammer befindliches pulverförmiges Material mit einer, insbesondere sinusförmigen, Schwingung beaufschlagt werden kann. Dies wird auf die gleiche Weise erreicht wie zuvor für die erste Bearbeitungskammer erläutert, d.h. im Betrieb wird die Schwingung über einen Boden und/oder eine Wandung des Behälters und/oder über in der zweiten Bearbeitungskammer vorgesehene Einbauten übertragen.

Das pulverförmige Material kann in der ersten und/oder, falls vorhanden, in der zweiten Bearbeitungskammer mit dem Gas in Kontakt gebracht werden. Unabhängig davon, in welcher Kammer der Kontakt mit dem Gas erfolgt, ist es jedoch in jedem Fall von Vorteil, wenn der Kontakt während der Fluidisierung stattfindet, da die einzelnen Partikel in diesem Zustand fein in dem Gas verteilt und somit für das Gas gut zugänglich sind.

Die Vorrichtung kann eine oder mehrere Messeinrichtungen umfassen, die dazu ausgebildet sind, Pulver- und/oder Prozessparameter zu erfassen, zu speichern und/oder miteinander zu verrechnen.

An geeigneten Stellen in der Vorrichtung vorgesehene Messeinrichtungen, z.B. Sensoren, können die Überwachung und Steuerung des in der Vorrichtung ablaufenden Misch- und/oder Konditionierprozesses unterstützen. Beispiele für Messeinrichtungen sind zum Beispiel Wägezellen, optische oder induktive Füllstandssensoren in Bearbeitungskammern, Speicherkammer oder Vorhalteeinheiten, geregelte Ventile und Absperrungsorgane für Pulver, Gase oder Flüssigkeiten, Feuchtesensoren, Messeinrichtungen für Frequenz und/oder Amplitude der Schwingung und so weiter.

Die Pulverparameter können mindestens einen physikalischen Parameter mindestens eines der ersten Bearbeitungskammer zugeführten pulverförmigen Materials umfassen, wobei der physikalische Parameter insbesondere aus Partikelgröße, Partikelgrößenverteilung, zugeführtem Volumen und zugeführter Masse ausgewählt sein kann.

Die Steuereinheit zur Ansteuerung des Schwingungserzeugers kann im einfachsten Fall ein EIN/AUS-Schalter zum Ein- und Ausschalten des Schwingungserzeugers sein. In einem solchen Fall kann beispielsweise die Vorrichtung so ausgebildet sein, dass Frequenz und Amplitude der Schwingung manuell am Schwingungserzeuger eingestellt werden können. Insbesondere ist die Steuereinheit jedoch dazu ausgebildet, zumindest eines von Amplitude und Frequenz der Schwingung, vorteilhafterweise sowohl die Amplitude als auch die Frequenz der Schwingung zu steuern. Die Steuereinheit kann zudem auch eine oder mehrere Regelaufgaben übernehmen.

Die Steuereinheit kann dazu ausgebildet sein, einen oder mehrere der in der Vorrichtung an pulverförmigen Materialien durchgeführten Prozessschritte zu steuern oder zu regeln, welche insbesondere ausgewählt sind aus Dosieren, Zuführen, Klassieren, Mischen, Konditionieren und Abführen. Dadurch wird die Herstellung eines homogenen pulverförmigen Materials bei der Vermischung und/oder Konditionierung erleichtert.

Insbesondere kann die Steuereinheit dazu ausgebildet sein, einen oder mehrere Parameter des Mischens und/oder Konditionierens zu steuern. Dabei kann es sich insbesondere um die Parameter des Materials (d.h. die Auswahl und die Menge des zuzuführenden Materials), der Schwingungsfrequenz, der Schwingungsamplitude, des Mischungsverhältnisses und/oder der Mischungsrate handeln.

Die Steuereinheit kann dazu ausgebildet sein, das Volumen und/oder die Masse mindestens eines zugeführten pulverförmigen Materials, insbesondere aller zugeführten pulverförmigen Materialien zu steuern. Dadurch ergibt sich der Vorteil einer genauen Dosierung und einer verbesserten Prozessstabilität.

Die vorliegende Erfindung betrifft auch ein Verfahren zum Betreiben einer Vorrichtung nach einem der Ansprüche 1 bis 14, wobei mindestens ein pulverförmiges Material in die erste Bearbeitungskammer eingebracht und durch Fluidisierung in ein Wirbelbett überführt wird und eine hierfür erforderliche Energie über den Schwingungserzeuger eingebracht wird, indem der Schwingungserzeuger das pulverförmige Material mit einer Schwingung, insbesondere einer sinusförmigen Schwingung, beaufschlagt. Dieses Verfahren ermöglicht die schonende Vermischung und/oder Konditionierung pulverförmiger Materialien ohne Austrag von Gas und Staub.

Die in dem Verfahren stattfindende Fluidisierung ist insbesondere eine fluidfreie Fluidisierung, die ausschließlich durch die Schwingung und nicht durch andere Maßnahmen, wie Einleiten eines Fluids in den Behälter hervorgerufen wird.

In dem Verfahren kann die Abweichung mindestens eines physikalischen Parameters des mindestens einen pulverförmigen Materials von einem Sollwert ermittelt werden, wobei der physikalische Parameter insbesondere eine mittlere Partikelgröße, eine Partikelgrößenverteilung und/oder eine Partikelmassenverteilung ist. Diese Überwachung kann beispielsweise mittels der Steuereinheit erfolgen.

Dadurch ergibt sich der Vorteil, dass die Wirksamkeit der Vermischung und/oder Konditionierung beurteilt werden kann, indem ein dafür geeigneter charakteristischer Parameter, insbesondere im Hinblick auf die Partikelgrößenverteilung (z.B. Mittelwerte, Medianwerte, Minimalwerte, Maximalwerte, Perzentile, Summenverteilungskurve bzgl. Masse oder Partikelgröße, d10, d50, d90-Werte) zur Beschreibung der Mischungsqualität oder der Homogenität herangezogen wird und es wird überwacht, wie stark diese Größe in einer oder mehreren Proben aus einem Misch- oder Konditioniervorgang vom Zielwert einer oder mehrerer charakteristischer Größen abweicht.

Partikelgrößenverteilungen ähnlicher Stoffsysteme unterliegen gewissen Schwankungen. Für die nachfolgenden Prozessschritte ist es nicht immer erforderlich, dass alle charakteristischen Größen innerhalb sehr enger Toleranzfenster liegen, sondern Bandbreiten sind zulässig.

Insbesondere kann daher eine maximal erlaubte Abweichung festgelegt werden. Diese kann beispielsweise als eine relative (prozentuale) Abweichung definiert sein. Beispielsweise kann überwacht werden, ob eine charakteristische Größe um weniger als ±20% von einem Sollwert abweicht. Gute Weiterverarbeitungseigenschaften können in einigen Anwendungen gegeben sein, wenn einer oder mehrere der oben genannten charakteristischen Werte innerhalb dieses Bereichs liegen.

Für anspruchsvollere Anwendungen kann es vorteilhaft sein, wenn die relative Abweichung von einem Sollwert, insbesondere im Hinblick auf eine Partikelgrößenverteilung, in einem engeren Toleranzfenster liegt. Beispielsweise kann überwacht werden, ob eine charakteristische Größe in mehreren Proben aus dem gleichen Misch- oder Konditioniervorgang um weniger als ±10%, insbesondere um weniger als ±5% von einem Sollwert abweicht.

Das pulverförmige Material kann ein (Leicht-)Metallpulver, ein Kunststoffpulver oder ein kunststoffhaltiges Pulver (z.B. Kunststoff-Metall-Hybrid-Pulver) sein, insbesondere mit einer mittleren Korngröße von weniger als 200 µm. Bei solchen Materialien wirkt sich die schonende fluidfreie Fluidisierung besonders vorteilhaft aus. So können beispielsweise Pulver für additive Fertigungsverfahren wirksam vermischt und/oder in ihren Eigenschaften homogenisiert werden. Das pulverförmige Material kann insbesondere ein Kunststoffpulver oder ein kunststoffhaltiges Pulver sein.

Die Fluidisierung kann in einer zeitlichen Abfolge zweier oder mehrerer Fluidisierungsphasen stattfindet, wobei sich insbesondere zumindest zwei Fluidisierungsphasen hinsichtlich mindestens eines Parameters unterscheiden.

Abhängig von den Pulvereigenschaften, dem zeitlichen Verlauf der Zuführung einzelner Pulverkomponenten und dem Ziel der Misch- oder Konditionieraufgabe kann es vorteilhaft sein, den Fluidisierungsprozess in verschiedene Phasen zu unterteilen. Diese Phasen unterscheiden sich zum Beispiel durch verschiedene Anlagenzustände in der Mischkammer (beispielsweise Füllstand, mittlere Partikelgröße, Feuchtigkeit der Partikel, Fließfähigkeit der Partikelschüttung). Daher kann es vorteilhaft sein, Prozessparameter wie zum Beispiel Frequenz und Amplitude der Schwingung den jeweiligen Phasen anzupassen. Es kann sich also eine zeitliche Abfolge verschiedener Fluidisierungsphasen ergeben, die unter anderem durch verschiedene Kombinationen von Parametern zur Anlageneinstellung gekennzeichnet sein können. Die Steuerung der zeitlichen Abfolge dieser Phasen mit ihren jeweiligen Parameterkombinationen kann vorteilhaft durch die mindestens eine Steuereinheit erfolgen.

In dem Verfahren kann die Steuereinheit die zeitliche Abfolge von Schritten steuern, die der Fluidisierung vor- und/oder nachgelagert sind. Dabei kann es sich insbesondere um einen oder mehrere Schritte handeln, die aus Bereitstellungs-, Zuführungs-, Abführungs-, Lagerungs- und Konditionierungsschritten sowie diesen Schritten zugeordneten Unterstützungsprozessen, wie Gasbereitstellung, Gasbefeuchtung, Ausschleusen von Pulveragglomerationen, ausgewählt sind. Beispielsweise kann somit neben einer manuellen auch eine teilautomatisierte oder automatisierte Zuführung und/oder Abführung realisiert werden.

Dies ermöglicht eine genauere Dosierung, eine höhere Prozessstabilität und eine, z.B. im Hinblick auf Staubentwicklung, sicherere Pulverhandhabung.

Die Steuereinheit kann beispielsweise die Bereitstellung des zu vermischenden und/oder konditionierenden pulverförmigen Materials bezüglich der bereitzustellenden Menge und, sofern zwei oder mehr pulverförmige Materialien vermischt werden, bezüglich des Mischungsverhältnisses erfassen und/oder regeln.

Die Menge wird und ggf. das Mischverhältnis wird insbesondere über das Volumen und/oder die Masse des zugeführten pulverförmigen Materials anhand von Vorgabewerten und hinterlegten Stoffdaten erfasst und geregelt. Die Vorgabewerte und die Stoffdaten können in der Steuereinheit gespeichert sein. Dadurch ergibt sich der Vorteil einer genauen Dosierung und einer verbesserten Prozessstabilität.

Die Steuereinheit kann mindestens einen Parameter der Fluidisierung, insbesondere ausgewählt aus Fluidisierungsdauer, Amplitude der Schwingung, Frequenz der Schwingung, Art der Fluidisierungsphasen und Anzahl der Fluidisierungsphasen, erfassen und/oder regeln. Dadurch wird die Herstellung eines homogenen pulverförmigen Materials bei der Vermischung und/oder Konditionierung erleichtert.

Die Steuereinheit kann mindestens einen physikalischen Parameter des pulverförmigen Materials erfassen und/oder regeln, der insbesondere aus Fließfähigkeit, Oberflächenladung, Oberflächenfeuchtigkeit oder Gesamtfeuchte ausgewählt ist.

Dies kann vor, während oder nach der Fluidisierung stattfinden.

Beispielsweise kann die Regelung der Oberflächenfeuchtigkeit eines Pulvers derart erfolgen wie bereits weiter oben beschrieben, d.h. indem das pulverförmige Material in der Vorrichtung mit einer Gasatmosphäre eingestellter und konstanter Feuchte in Kontakt gebracht wird, was die Einstellung der Feuchte, insbesondere Oberflächenfeuchte eines pulverförmigen Materials erlaubt, wobei die Gasfeuchte mit Hilfe einer in der Vorrichtung vorgesehenen Gasüberwachungseinheit eingestellt wird.

Die Messeinrichtungen können Messwerte generieren, die in der Steuereinheit gespeichert werden. Somit können zum Beispiel prozessrelevante Stoffdaten der gehandhabten Feststoffe und deren zeitliche Änderung im Prozess über Sensoren und andere Messeinrichtungen erfasst werden. Ebenso können prozessrelevante Maschinendaten und deren Änderung im Prozess erfasst werden.

Die gespeicherten Messwerte können zur kontinuierlichen Prozessüberwachung des Fluidisierungsprozesses verwendet werden.

Die Steuereinheit kann die Stellgrößen, Produktparameter und Sensorwerte über Kennlinien, Regelkreise, Algorithmen oder künstliche Intelligenz zur Regelung und Optimierung des Misch- oder Konditioniervorgangs im laufenden Betrieb nutzen.

Nachfolgend wird die vorliegende Erfindung rein beispielhaft anhand einer vorteilhaften Ausführungsform und unter Bezugnahme auf die beigefügten Zeichnungen beschrieben. Es zeigt:
- Fig. 1: eine Seitenansicht einer erfindungsgemäßen Vorrichtung;
- Fig. 2: eine weitere Seitenansicht der Vorrichtung;
- Fig. 3: eine weitere Seitenansicht der Vorrichtung;
- Fig. 4: eine weitere Seitenansicht der Vorrichtung; und
- Fig. 5: eine weitere Seitenansicht der Vorrichtung.

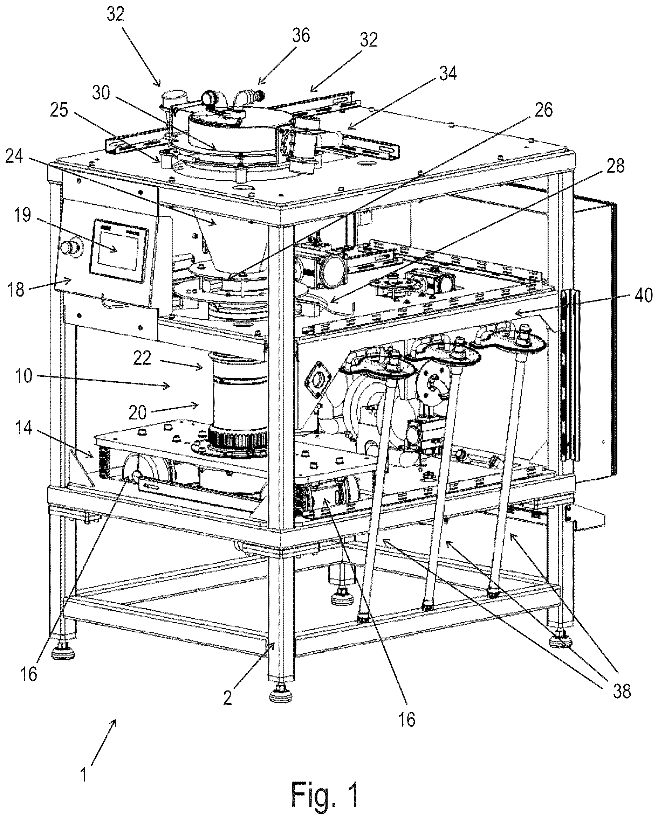

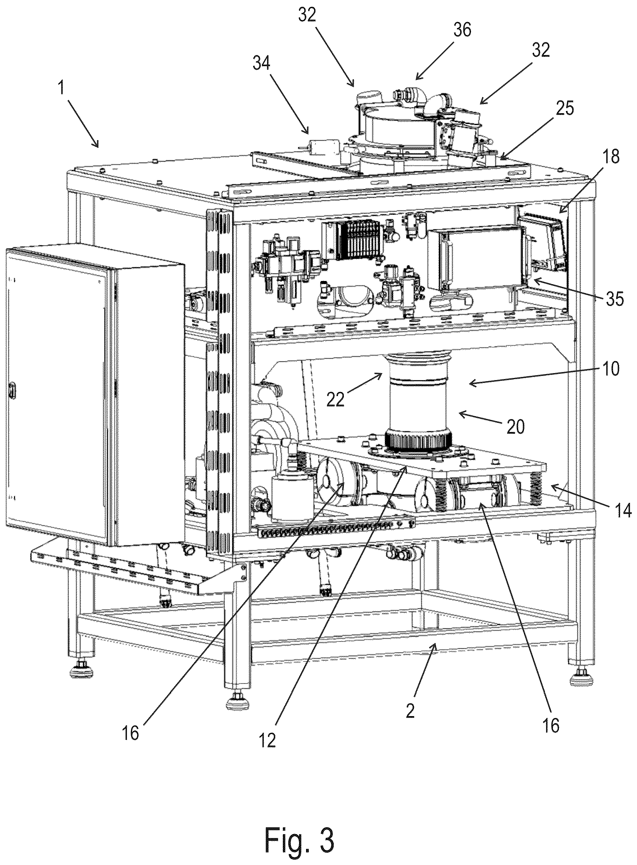

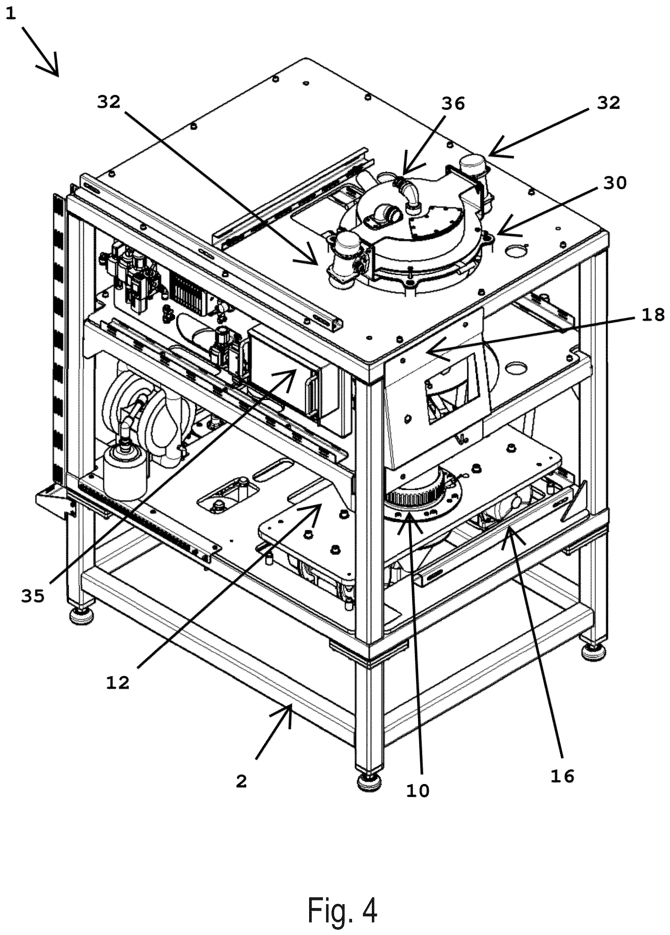

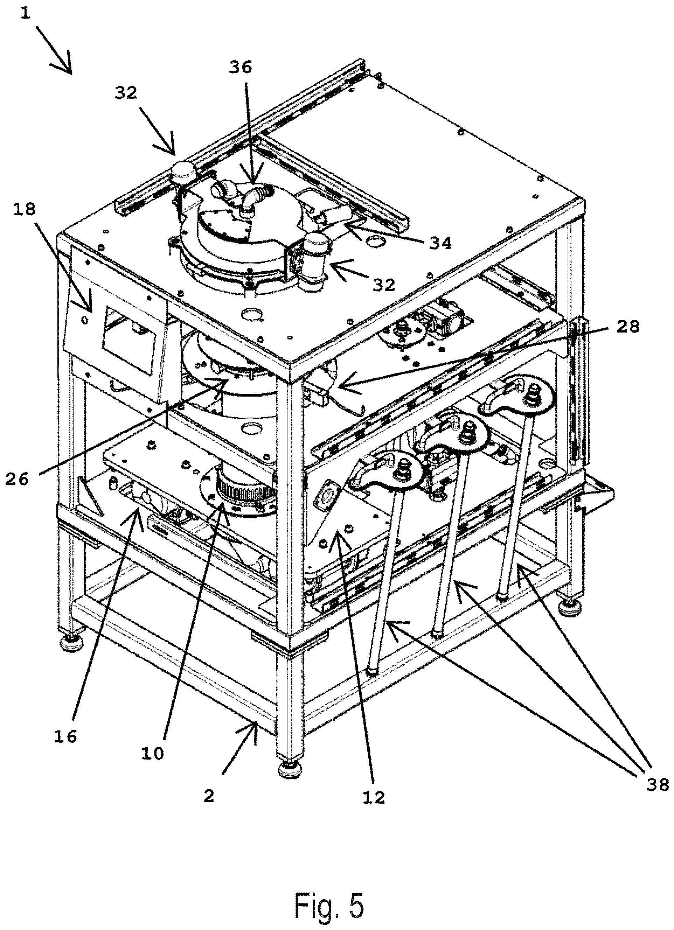

Die in den Figuren 1 bis 5 gezeigte Vorrichtung 1 weist einen Behälter 10 auf, der auf einer darunter angeordneten horizontalen Grundplatte 12 befestigt ist, die wiederum über Federn 14 mit einem Grundgestell 2 der Vorrichtung 1 verbunden ist.

Der Behälter 10 ist somit zumindest in einer vertikalen Schwingungsrichtung beweglich gelagert. An der Unterseite der Grundplatte 12 ist ein Schwingungserzeuger 16 angebracht, mit dessen Hilfe sich der Behälter 10 in Schwingungen, insbesondere vertikale Schwingungen, versetzen lässt. Der Schwingungserzeuger 16 ist mit einer Steuereinheit 18 verbunden, mittels derer der Schwingungserzeuger 16 zumindest ein- und ausgeschaltet werden kann. Insbesondere lässt sich mittels der Steuereinheit 18 auch die Frequenz und/oder die Amplitude der Schwingung einstellen. Die Steuereinheit 18 weist eine Anzeige 19 auf, die Informationen über den Betriebszustand der Vorrichtung 1, Prozessparameter (z.B. Frequenz, Amplitude) und/oder Messwerte (z.B. Pulvergewicht, Gasfeuchte) anzeigen kann.

Die Anzeige 19 kann als Touchscreen ausgebildet sein und somit eine Steuerung der Vorrichtung 1 durch Berührung der Anzeige 19 erlauben. Die Steuereinheit 18 kann zudem einen nicht-flüchtigen Speicher (nicht gezeigt) enthalten, auf dem beispielsweise Stoffdaten zu Pulvern und/oder vorgegebene Fluidisierungsparameter hinterlegt sein können. Der nicht-flüchtige Speicher kann auch genutzt werden, um Prozessparameter aufzuzeichnen, mit der Vorrichtung 1 durchgeführte Misch- und Konditioniervorgänge zu protokollieren und/oder während des Betriebs der Vorrichtung 1 gemessene Messwerte zu speichern.

Des Weiteren definiert der Behälter 10 eine Bearbeitungskammer 20 zur Aufnahme einer Partikelschüttung. Oberhalb der Bearbeitungskammer 20 ist ein Faltenbalg 22 angeordnet, der die Bearbeitungskammer in vertikal flexibler Weise mit einem Trichter 24 für die Zuführung pulverförmiger Materialien verbindet.

Zwischen dem Trichter 24 und dem Faltenbalg 22 befinden sich eine beispielsweise als Butterfly-Ventil ausgebildete Absperrklappe 26, über welche die schwerkraftbasierte oder angetriebene Zufuhr in den Trichter 24 gegebener Pulver in die Bearbeitungskammer 20 gesteuert werden kann. Insbesondere kann die Absperrklappe 26 über die Steuereinheit 18 geöffnet und geschlossen werden. Zur Dosierung und ggf. zur Festlegung des Mischungsverhältnisses kann das Gewicht eines im Trichter 24 vorhandenen Pulvers mit Hilfe mehrerer unterhalb des Trichters 24 angeordneter Wägezellen 28 bestimmt werden. Das durch die Wägezellen 28 ermittelte Gewicht kann auf der Anzeige 19 angezeigt und insbesondere in einem nicht-flüchtigen Speicher der Steuereinheit 18 gespeichert werden.

Zwischen dem oberen Ende des Trichters 24 und dem Grundgestell 2 sind mehrere Gummipuffer 25 angeordnet. Am oberen Ende des Trichters 24 befindet sich zudem ein Sieb 30. Dieses dient dazu, gröbere Partikel und Agglomerate sowie ggf. im Pulver vorhandene Fremdkörper zurückzuhalten. Um den Durchtritt des Pulvers durch das Sieb 30 zu erleichtern und Agglomerate aufzubrechen, sind beispielsweise insbesondere zwei Vibrationsmotoren 32, ein Ultraschallerzeuger 34 und eine Steuerungseinheit 35 für den Ultraschallerzeuger vorgesehen. Diese können lediglich die Zufuhr des Pulvers unterstützen und müssen nicht an der anschließenden Fluidisierung beteiligt sein.

Die Zufuhr von Pulver erfolgt über einen Anschluss 36 oberhalb des Siebs 30. An den Anschluss 36 kann ein Schlauch (nicht gezeigt) angeschlossen werden, der wiederum mit einer Sauglanze 38 verbunden werden kann. Die Sauglanze 38 kann aus einer Halterung 40 entnommen werden, um in einen Vorratsbehälter (nicht gezeigt) gesteckt zu werden, in dem ein zuzuführendes Pulver vorgehalten wird. Mittels Unterdrucks, der zum Beispiel durch eine Membranpumpe (nicht gezeigt) erzeugt werden kann, kann das Pulver dann in die Vorrichtung 1 gesaugt werden, welches zunächst das Sieb 30 durchströmt. Das Pulvermaterial, das durch das Sieb 30 hindurchgetreten ist, kann, bei geöffneter Absperrklappe 26, unter der Einwirkung der Schwerkraft, durch den Faltenbalg 22 hindurch in den Behälter 10 und somit in die Bearbeitungskammer 20 fallen. Dieser Vorgang kann wiederholt werden, bis sich alle gewünschten Pulverkomponenten einer herzustellenden Pulvermischung in der Bearbeitungskammer 20 befinden.

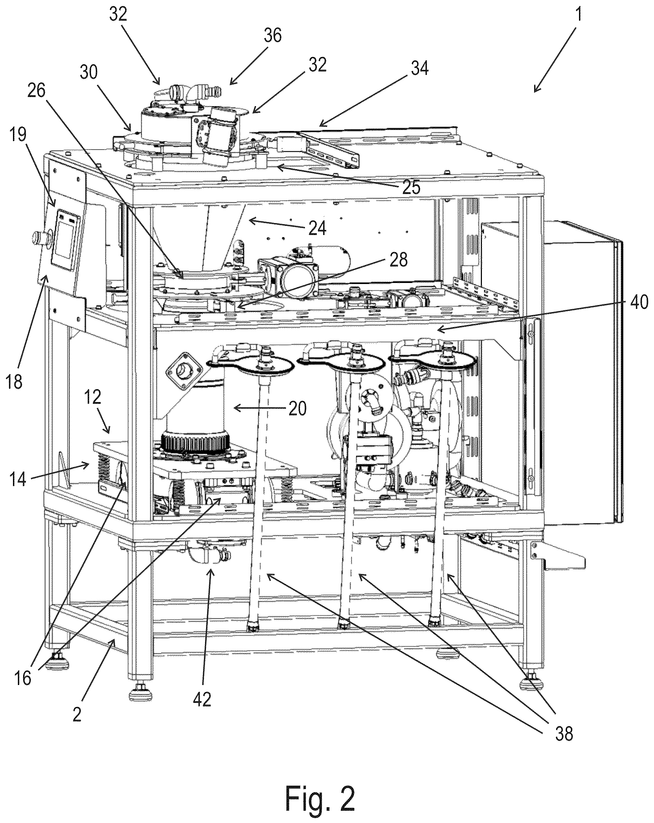

Am unteren Ende der Vorrichtung 1, unterhalb der Grundplatte 12 und des Schwingungserzeugers 16, befindet sich ein Auslass 42 (Fig. 2), über den das vermischte und/oder konditionierte Pulver nach erfolgter Fluidisierung aus der Vorrichtung 1 entnommen werden und in einem hierfür bereitgestellten Behälter (nicht gezeigt) aufgenommen werden kann. Die Entnahme kann, ähnlich wie oben für die Zuführung erläutert, durch Absaugen, also z.B. durch Anbringen eines Schlauchs (nicht gezeigt) und Anlegen von Unterdruck mittels einer Pumpe, erfolgen. Alternativ kann auch eine Entnahme des Pulvers beispielsweise durch Einwirkung der Schwerkraft erfolgen.

## Patentansprüche

1. Vorrichtung (1) zur Vermischung und/oder Konditionierung pulverförmiger Materialien durch fluidfreie Fluidisierung, umfassend:
einen beweglich gelagerten Behälter (10), der eine erste Bearbeitungskammer (20) zur Aufnahme pulverförmigen Materials definiert;
einen Schwingungserzeuger (16), durch den im Betrieb ein in der Bearbeitungskammer (20) befindliches pulverförmiges Material mit einer Schwingung, insbesondere einer sinusförmigen Schwingung, beaufschlagt werden kann; und
eine Steuereinheit (18), die den Schwingungserzeuger ansteuert.

2. Vorrichtung (1) nach Anspruch 1,
wobei die Vorrichtung (1) eine, insbesondere mechanische, Kopplung zwischen dem Behälter (10) und dem Schwingungserzeuger (16) umfasst, die so ausgebildet ist, dass im Betrieb die Schwingung über einen Boden und/oder eine Wandung des Behälters (10) auf ein in der ersten Bearbeitungskammer (20) befindliches pulverförmiges Material übertragen wird.

3. Vorrichtung (1) nach Anspruch 1 oder 2,
wobei die erste Bearbeitungskammer (20) einen Einbau oder mehrere Einbauten enthält, der/die so ausgebildet ist/sind, dass im Betrieb die sinusförmige Schwingung über den Einbau oder die mehreren Einbauten auf ein in der ersten Bearbeitungskammer (20) befindliches pulverförmiges Material übertragen wird,
und/oder die erste Bearbeitungskammer (20) einen Einbau oder mehrere Einbauten enthält, die fest angebracht sind, wobei die Einbauten insbesondere so ausgebildet sind, dass sie sich aus der Bearbeitungskammer entnehmen lassen und/oder den Durchtritt von Partikeln mit einer Partikelgröße unterhalb einer vorgegebenen Partikelgröße erlauben.

4. Vorrichtung (1) nach einem der vorstehenden Ansprüche, umfassend:
eine Gasüberwachungseinheit, die dazu ausgebildet ist, die Zusammensetzung, insbesondere die Gasfeuchte, eines Gases, das mit zu vermischendem und/oder zu konditionierendem pulverförmigem Material in Kontakt steht oder gebracht werden soll, zu erfassen und/oder zu regeln.

5. Vorrichtung (1) nach Anspruch 4,
wobei die Vorrichtung (1) eine zweite Bearbeitungskammer zum in Kontakt Bringen des Gases mit dem pulverförmigen Material umfasst,
wobei optional durch den Schwingungserzeuger (16) im Betrieb auch ein in der zweiten Bearbeitungskammer befindliches pulverförmiges Material mit einer, insbesondere sinusförmigen, Schwingung beaufschlagt werden kann.

6. Vorrichtung (1) nach einem der vorstehenden Ansprüche, umfassend:
eine oder mehrere Messeinrichtungen (28), die dazu ausgebildet sind, Pulver- und/oder Prozessparameter zu erfassen, zu speichern und/oder miteinander zu verrechnen,
insbesondere wobei die Pulverparameter mindestens eine Größe umfassen, die aus Partikelgröße, Partikelgrößenverteilung, zugeführtem Volumen und zugeführter Masse ausgewählt ist.

7. Vorrichtung (1) nach einem der vorstehenden Ansprüche,
wobei die Steuereinheit (18) dazu ausgebildet ist, einen oder mehrere in der Vorrichtung (1) an pulverförmigen Materialien durchgeführte Prozessschritte zu steuern, welche insbesondere ausgewählt sind aus Dosieren, Zuführen, Klassieren, Mischen, Konditionieren und Abführen,
insbesondere wobei die Steuereinheit (18) dazu ausgebildet ist, die Parameter des Mischens und/oder Konditionierens zu steuern, insbesondere die Parameter des Materials, des Mischungsverhältnisses, der Mischungsrate, der Schwingungsfrequenz und/oder der Schwingungsamplitude.

8. Vorrichtung (1) nach Anspruch 7,
wobei die Steuereinheit (18) dazu ausgebildet ist, das Volumen und/oder die Masse mindestens eines zugeführten pulverförmigen Materials zu steuern.

9. Verfahren zum Betreiben einer Vorrichtung (1) nach einem der vorangehenden Ansprüche, wobei mindestens ein pulverförmiges Material in die erste Bearbeitungskammer (20) eingebracht und durch Fluidisierung in ein Wirbelbett überführt wird und eine hierfür erforderliche Energie über den Schwingungserzeuger (16) eingebracht wird, indem der Schwingungserzeuger (16) das pulverförmige Material mit einer Schwingung, insbesondere einer sinusförmigen Schwingung, beaufschlagt.

10. Verfahren nach Anspruch 9,
wobei durch die Steuereinheit (18) eine Abweichung mindestens eines physikalischen Parameters des mindestens einen pulverförmigen Materials von einem Sollwert ermittelt wird, wobei der physikalische Parameter insbesondere eine mittlere Partikelgröße, eine Partikelgrößenverteilung und/oder eine Partikelmassenverteilung ist.

11. Verfahren nach Anspruch 9 oder 10,
wobei die Fluidisierung in einer zeitlichen Abfolge zweier oder mehrerer Fluidisierungsphasen stattfindet, wobei sich insbesondere zumindest zwei Fluidisierungsphasen hinsichtlich mindestens eines Parameters unterscheiden.

12. Verfahren nach einem der Ansprüche 9 bis 11,
wobei die Steuereinheit (18) die zeitliche Abfolge von Schritten steuert, die der Fluidisierung vor- und/oder nachgelagert sind,
insbesondere wobei die Steuereinheit (18) die Bereitstellung des zu vermischenden und/oder konditionierenden pulverförmigen Materials bezüglich der bereitzustellenden Menge und, sofern zwei oder mehr pulverförmige Materialien vermischt werden, bezüglich des Mischungsverhältnisses steuert oder regelt.

13. Verfahren nach einem der Ansprüche 9 bis 12,
wobei die Steuereinheit (18) mindestens einen Parameter der Fluidisierung, insbesondere ausgewählt aus Fluidisierungsdauer, Amplitude der Schwingung, Frequenz der Schwingung, Art der Fluidisierungsphasen und Anzahl der Fluidisierungsphasen, erfasst und/oder regelt.

14. Verfahren nach einem der Ansprüche 9 bis 13,
wobei die Steuereinheit (18) mindestens einen physikalischen Parameter des pulverförmigen Materials erfasst und /oder regelt, der aus Fließfähigkeit, Oberflächenladung, Oberflächenfeuchtigkeit oder Gesamtfeuchte ausgewählt ist.

15. Verfahren nach einem der Ansprüche 9 bis 14,
wobei die Messeinrichtungen (28) Messwerte generieren, die in der Steuereinheit (18) gespeichert werden,
insbesondere wobei die gespeicherten Messwerte zur kontinuierlichen Prozessüberwachung des Fluidisierungsprozesses verwendet werden.
